# EUROPÄISCHE PATENTANMELDUNG

(11) **EP 1 717 757 A1**
(43) Veröffentlichungstag der Anmeldung: **02.11.2006**
(21) Anmeldenummer: 05009287.3
(22) Anmeldetag: 28.04.2005
(51) Int. Cl.: G06T 17/00, B60R 1/00

(54) **Verfahren zur grafischen Darstellung der Umgebung eines Kraftfahrzeugs**

(71) Anmelder: Bayerische Motoren Werke Aktiengesellschaft, 80809 München (DE)
(72) Erfinder: Augst, Alexander, 80937 München (DE)

(57) **Zusammenfassung**

Bei einem Verfahren zur grafischen Darstellung der Umgebung eines Kraftfahrzeugs, bei welchem einem Szenenbild, welches eine dreidimensionale Umgebungsszene der Umgebung des Kraftfahrzeugs darstellt und welches zweidimensional oder dreidimensional an den Fahrer des Kraftfahrzeugs ausgegeben wird, Grafikelemente überlagert werden, welche zur Unterstützung des Fahrers hinsichtlich der Interpretation der im Szenenbild enthaltenen räumlichen Information dienen, werden die Grafikelemente zumindest teilweise so ausgeführt und im Szenenbild angeordnet, dass sie in der Umgebungsszene zumindest ein virtuelles Begrenzungsobjekt mit dreidimensionaler Raumform verkörpern, welches zumindest eine Bezugsfläche aufweist, die einen kollisionsfrei durch das Kraftfahrzeug erreichbaren Freiraum von einem nicht kollisionsfrei erreichbaren Hindernisraum abgrenzt.

## Beschreibung

Die vorliegende Erfindung betrifft ein Verfahren zur grafischen Darstellung der Umgebung eines Kraftfahrzeugs, bei welchem einem Szenenbild, welches eine dreidimensionale Umgebungsszene der Umgebung des Kraftfahrzeugs darstellt und welches zweidimensional oder dreidimensional an den Fahrer des Kraftfahrzeugs ausgegeben wird, Grafikelemente überlagert werden, welche zur Unterstützung des Fahrers hinsichtlich der Interpretation der im Szenenbild enthaltenen räumlichen Information dienen.

Zur Unterstützung des Fahrers eines Kraftfahrzeugs hinsichtlich der Einschätzung der räumlichen Verhältnisse rund um das Kraftfahrzeug ist es bekannt, die Umgebung des Kraftfahrzeugs in einem Szenenbild darzustellen und dieses an den Fahrer auszugeben.

Die Ausgabe eines solchen Szenenbilds an den Fahrer erfolgt typischerweise durch eine grafische Anzeigeeinrichtung. Die Darstellung kann dabei zweidimensional durch herkömmliche Bilddarstellungsmittel, z. B. einen herkömmlichen Monitor, oder dreidimensional durch zur dreidimensionalen Darstellung geeignete Bilddarstellungsmittel erfolgen. Als zur dreidimensionalen Darstellung geeignete Bilddarstellungsmittel kommen z. B. lentikulare oder holografische Bilddarstellungsmittel in Frage. Das Szenenbild stellt in vielen Fällen eine räumliche, also dreidimensionale Umgebungsszene dar. Das Kraftfahrzeug selbst oder ein Teil des Kraftfahrzeugs oder ein Symbol für dasselbe kann Teil der dargestellten Umgebungsszene sein.

Das Szenenbild wird typischerweise durch zumindest eine Bilderfassungsvorrichtung, z. B. eine Kamera, insbesondere eine Rückfahrkamera, des Kraftfahrzeugs gewonnen. Alternativ kann das Szenenbild rechnergestützt generiert werden. Ein verzerrt erfasstes Realbild kann gegebenenfalls zur übersichtlicheren Darstellung entzerrt dargestellt werden.

Es ist ferner bekannt, ein an den Fahrer ausgegebenes Szenenbild durch Grafikelemente zu überlagern, welche zur Unterstützung des Fahrers hinsichtlich der Interpretation der im Szenenbild enthaltenen räumlichen Information dienen.

Beispielsweise ist es aus der US 2002 / 0175999 A1 bekannt, einem erfassten Kamerabild bei dessen Darstellung Grafikelemente, insbesondere Warnlinien, zu überlagern, um den Fahrer bei der Interpretation des dargestellten Bildes zu unterstützen. Die Interpretation solcher Warnlinien und die Ableitung eines entsprechend der dargestellten Situation veränderten Bedienverhaltens ist jedoch, gerade für nicht mit solchen Bilddarstellungsmethoden vertraute Fahrer, äußerst schwierig.

Aus der EP 1 469 422 A1 ist es bekannt, eine anhand des aktuellen Lenkwinkels prädizierte zukünftige Position das Kraftfahrzeugs grafisch in einem an den Fahrer ausgegebenen Szenenbild darzustellen. Hierbei besteht ebenfalls der Nachteil, dass die Interpretation für nicht mit solchen Bilddarstellungsmethoden vertraute Fahrer schwierig ist. Zudem ist eine solche Darstellung sehr stark auf eine Beurteilung und ggf. Anpassung des Bedienverhaltens des Fahrers, beispielsweise eine Veränderung des Lenkwinkels, zugeschnitten. Viele Fahrer wünschen jedoch keine ihr Bedienverhalten betreffenden Vorschläge oder eine Beurteilung ihres aktuellen Bedienverhaltens, weshalb eine solche Darstellungsform von vielen Fahrern als unnötig oder gar störend empfunden wird.

Aufgabe der vorliegenden Erfindung ist es, ein Verfahren der eingangs genannten Gattung zu schaffen, welches eine Darstellungsform der Umgebungsszene ermöglicht, die den Fahrer bestmöglich bei der Interpretation der Umgebungsszene unterstützt.

Gelöst wird diese Aufgabe erfindungsgemäß durch ein Verfahren der eingangs genannten Gattung bei welchem die dem Szenenbild überlagerten Grafikelemente zumindest teilweise so ausgeführt und im Szenenbild angeordnet werden, dass sie in der Umgebungsszene zumindest ein virtuelles Begrenzungsobjekt mit dreidimensionaler Raumform verkörpern, welches zumindest eine Bezugsfläche aufweist, die einen kollisionsfrei durch das Kraftfahrzeug erreichbaren Freiraum von einem nicht kollisionsfrei erreichbaren Hindernisraum abgrenzt.

Der Erfindung liegt der Gedanke zugrunde, dass die Interpretation einer durch Grafikelemente angereicherten Darstellung einer dreidimensionalen Umgebungsszene dem Fahrer dann besonders leicht fällt, wenn die Grafikelemente intuitiv, insbesondere ohne ein Umdenken, in die Umgebungsszene miteinbezogen werden können.. Dies ist insbesondere dann der Fall, wenn die Darstellung der Umgebungsszene teilweise oder ausschließlich mit Grafikelementen angereichert wird, welche vom Fahrer als in der Umgebungsszene angeordnete räumliche Objekte wahrgenommen werden. Die dem Szenenbild erfindungsgemäß überlagerten Grafikelemente werden daher derart ausgeführt und im Szenenbild angeordnet, dass sie virtuelle Objekte verkörpern, die in der dreidimensionalen Umgebungsszene angeordnet sind und dort eine dreidimensionale Raumform besitzen. Die Gesamtdarstellung entspricht somit den Erfahrungen des Fahrers und ist mit geringer Interpretationsleistung durch diesen interpretierbar.

Grafikelemente, beispielsweise Hilfs- oder Warnlinien, welche einem Szenenbild einer dreidimensionalen Umgebungsszene gemäß dem Stand der Technik überlagert werden, besitzen keine oder zumindest keine klar erkennbare Raumform in der Umgebungsszene. Der Fahrer kann diese Grafikelemente somit bestenfalls als Markierungen interpretieren bzw. muss im ungünstigsten Fall zwischen der dreidimensionalen Umgebungsszene und einer virtuellen, der Umgebungsszene überlagerten Ebene umdenken. Ungünstig ist ebenfalls, wenn der Fahrer die Grafikelementen zwar gedanklich in die Umgebungsszene integriert, die Verkörperung der Grafikelemente in der Umgebungsszene jedoch keine oder zumindest keine klar erkennbare Raumform besitzt, welche den Erfahrungen des Fahrers entspricht. In allen genannten Fällen erfordert die Interpretation der gemäß dem Stand der Technik überlagerten Grafikelemente eine unnötig hohe Interpretationsleistung des Fahrers.

Wird das an den Fahrer ausgegebene Szenenbild dagegen erfindungsgemäß so aufbereitet, dass in der Wahrnehmung des Fahrers die dreidimensionale Umgebungsszene durch Objekte angereichert wird, welche eine dreidimensionale Raumform in der Umgebungsszene besitzen, ist eine zuverlässige Interpretation der räumlichen Verhältnisse in der Umgebungsszene durch den Fahrer mit verhältnismäßig geringer Interpretationsleistung möglich.

Voraussetzung hierfür ist eine vom Fahrer als sowohl in sich räumlich stimmig als auch mit der Umgebungsszene konsistent wahrnehmbare Darstellung der virtuellen Objekte. Eine solche Darstellung ist mit heute an sich bekannten und verfügbaren Verfahren und Vorrichtungen zur Generierung und grafischen Ausgabe dreidimensionaler Szenen problemlos durchführbar.

Die Unterstützung des Fahrers durch die grafische Integration eines oder mehrerer virtueller Objekte in die Umgebungsszene besteht erfindungsgemäß darin, dass ein kollisionsfrei durch das Kraftfahrzeug erreichbarer Freiraum von einem nicht kollisionsfrei erreichbaren Hindernisraum abgegrenzt wird. Erfindungsgemäß verkörpern die dem Szenenbild überlagerten Grafikelemente in der Umgebungsszene zumindest ein virtuelles Begrenzungsobjekt mit dreidimensionaler Raumform, welches zumindest eine Bezugsfläche aufweist, die einen kollisionsfrei durch das Kraftfahrzeug erreichbaren Freiraum von einem nicht kollisionsfrei erreichbaren Hindernisraum abgrenzt.

Die Grafikelemente können je nach Ausführungsform und/oder dargestellter Umgebungsszene ein einziges oder mehrere solcher Begrenzungsobjekte verkörpern. Zu der Verkörperung können alle oder nur ausgewählte Grafikelemente beitragen. Sofern Grafikelemente nicht zur Verkörperung eines Begrenzungsobjekts beitragen, können diese dem Szenenbild für andere Zwecke überlagert werden.

Um den Fahrer bestmöglich zu unterstützen, wird die dreidimensionale Raumform des zumindest einen Begrenzungsobjekts erfindungsgemäß so festgelegt, dass für den Fahrer idealerweise intuitiv, spätestens aber nach entsprechender Anleitung, eine Bezugsfläche erkennbar ist, die für die Abgrenzung zwischen Freiraum und Hindernisraum ausschlaggebend ist. Bei einer solchen Bezugsfläche kann es sich beispielsweise um einen Teil der Oberfläche eines Begrenzungsobjekts handeln. Ebenso kann es sich aber um eine, gegebenenfalls grafisch selbst nicht im Szenenbild dargestellte, Fläche handeln, welche sich aus der dreidimensionalen Raumform des zumindest einen Begrenzungsobjekts ergibt, z. B. eine Symmetriefläche. Die Bezugsfläche kann komplett oder stückweise aus einer einzigen oder mehreren ebenen Flächen und/oder einer einzigen oder mehreren im Raum gekrümmten Hyperflächen bestehen.

Vorzugsweise werden die Grafikelemente so ausgeführt und im Szenenbild angeordnet, dass die Abgrenzung zwischen Freiraum und Hindernisraum durch die zumindest eine Bezugsfläche horizontal im Wesentlichen durchgängig ist. Der Zusatz horizontal bezieht sich dabei auf die dreidimensionale Umgebungsszene. Durch eine durchgängige horizontale Abgrenzung in der Umgebungsszene entsteht für den Fahrer keine Unklarheit darüber, wie Freiraum und Hindernisraum in etwaigen Zwischenräumen zwischen mehreren Bezugsflächen oder in Aussparungen einer Bezugsfläche abzugrenzen sind. Vielmehr ermöglicht eine ansonsten durchgängige Abgrenzung die Möglichkeit, die Darstellung so zu gestalten, dass eventuell vorhandene Zwischenräume zwischen Bezugsflächen oder Aussparungen in Bezugsflächen als besonders weite Ausdehnung des Freiraums oder des Hindernisraums zu verstehen sind. Eine derart gestaltete Darstellung ist technisch einfach realisierbar und insbesondere in Verbindung mit der erfindungsgemäß vorgesehenen Darstellung von Begrenzungsobjekten mit dreidimensionaler Raumform sehr einfach durch den Fahrer interpretierbar.

Zudem erleichtert eine im Wesentlichen durchgängige horizontale Abgrenzung für den Fahrer die Interpretation der Raumform des zumindest einen virtuellen Begrenzungsobjekts und somit die Entnahme der durch ein solches Begrenzungsobjekt dargestellten Information.

Da nur der im Szenenbild abgebildete Teil der Umgebungsszene für den Fahrer einsehbar ist, kann die Definition und Darstellung des zumindest einen Begrenzungsobjekts auf diesen Teil beschränkt werden. Die horizontale Durchgängigkeit des zumindest einen Begrenzungsobjekts betrifft somit ebenfalls nur diesen Teil der Umgebungsszene.

Die Höhe eines dargestellten Begrenzungsobjekts bzw. ein Höhenprofil desselben in der Umgebungsszene wird vorzugsweise im Wesentlichen konstant gewählt, kann alternativ aber, etwa zur Verdeutlichung der Eigenschaften von Hindernissen, etwa der Höhe oder Nachgiebigkeit von Hindernissen, variabel ausgeführt sein. Vorzugsweise wird die Höhe eines dargestellten Begrenzungsobjekts so gering gewählt, dass durch dieses nur ein verhältnismäßig kleiner Teil der Umgebungsszene, insbesondere des Hindernisraums verdeckt wird, jedoch hoch genug, um den abgrenzenden Charakter des Begrenzungsobjekts zu verdeutlichen.

Um insbesondere im Hindernisraum angeordnete Bestandteile der Umgebungsszene nicht zu verdecken und den Fahrer in seiner Interpretation der Szene nicht zu beeinträchtigen, werden die Grafikelemente, welche das zumindest eine virtuelle Begrenzungsobjekt verkörpern, vorzugsweise zumindest teilweise zumindest teiltransparent ausgeführt. Das zumindest eine virtuelle Begrenzungsobjekt ist in diesem Fall ebenfalls zumindest teilweise voll- oder teiltransparent und ermöglicht die Erkennung von Bestandteilen der Umgebungsszene, welche vom Beobachtungspunkt aus hinter dem Begrenzungsobjekt angeordnet sind.

Gemäß einer bevorzugten Weiterbildung dieses optionalen Merkmals der vorliegenden Erfindung wird die Transparenz der Grafikelemente in Abhängigkeit von der Helligkeit und/oder dem Kontrast der Umgebungsszene bzw. deren Bestandteile angepasst.

Insbesondere bei vollständig oder annähernd transparent ausgeführten Begrenzungsobjekten werden vorzugsweise sämtliche oder ausgewählte Konturen oder Konturbereiche des jeweiligen Begrenzungsobjekts mit geringerer Transparenz ausgeführt als die Flächen- und Volumeninhalte des Objekts. Unter Umständen können die Konturen sogar komplett opak ausgeführt werden. Durch die auf diese Weise klar erkennbaren Konturen des zumindest einen virtuellen Begrenzungsobjekts ist dessen dreidimensionale Objektform durch den Fahrer leicht interpretierbar. Da sich die geringe oder nicht vorhandene Transparenz lediglich auf die in der Regel dünnen Konturen des zumindest einen Begrenzungsobjekts bezieht, entsteht daraus kaum eine erhöhte Verdeckung des Hindernisraums.

Eine bessere Erkennbarkeit der Konturen und somit eine bessere Interpretierbarkeit der Raumform des zumindest einen Begrenzungsobjekts kann alternativ oder zusätzlich auch durch eine Farbvariation zwischen Konturen und angrenzenden Flächen- und Volumeninhalten erreicht werden.

Die erfindungsgemäße Darstellung eines Begrenzungsobjekts mit dreidimensionaler Raumform impliziert gemäß einer bevorzugten Ausführungsform der vorliegenden Erfindung eine perspektivische Verzerrung des Objekts, die sich im Szenenbild beispielsweise in einem Aufeinanderzulaufen von Linien äußert, welche in der Umgebungsszene parallel vom Beobachtungspunkt weglaufen. Zudem oder alternativ wird das zumindest eine Begrenzungsobjekt vorzugsweise perspektivisch skaliert dargestellt. Das bedeutet, dass die Form und Größe der Darstellung des Objekts im Szenenbild abhängig vom Abstand zwischen dem virtuellen Begrenzungspunkt und dem Beobachtungspunkt gewählt wird.

Vorzugsweise erfolgt eine eventuelle perspektivische Skalierung und/oder Verzerrung des zumindest einen Begrenzungsobjekts proportional zur Skalierung und/oder Verzerrung der realen Bestandteile der Umgebungsszene. Technisch lässt sich dies beispielsweise realisieren durch eine dreidimensionale Modellierung des zumindest einen Begrenzungsobjekts im Maßstab der Umgebungsszene und eine grafische Darstellung, deren Parameter, insbesondere Beobachtungsposition und Öffnungswinkel, denjenigen des Szenenbilds entsprechen. Eine solche proportionale Skalierung und/oder Verzerrung resultiert in einer für den Fahrer als realistisch wahrnehmbaren und somit leicht interpretierbaren Darstellung.

Alternativ kann eine eventuelle perspektivische Skalierung und/oder Verzerrung des zumindest einen Begrenzungsobjekts auch überproportional oder unterproportional durchgeführt werden. Insbesondere eine überproportionale Skalierung kann beim Fahrer den Eindruck einer Annäherung oder Entfernung zwischen Objekt und Beobachtungspunkt verstärken.

Vorzugsweise wird die dreidimensionale Raumform des zumindest einen Begrenzungsobjekts so gewählt, dass sich für den Fahrer eine möglichst klare Abgrenzung zwischen Freiraum und Hindernisraum ergibt. Die dem Szenenbild überlagerten Grafikelemente werden daher vorzugsweise so ausgeführt und im Szenenbild angeordnet, dass das zumindest eine virtuelle Begrenzungsobjekt eine zu dem Freiraum weisende im Wesentlichen senkrecht in der Umgebungsszene angeordnete Oberfläche aufweist. Eine solche Oberfläche wird vom Fahrer in der Regel problemlos als Bezugsfläche zur Abgrenzung zwischen Freiraum und Hindernisraum erkannt. Zudem ist eine solche Oberfläche bei einer Anordnung des Beobachtungspunkts im Freiraum in der Regel vollständig von diesem Beobachtungspunkt aus sichtbar. Ein weiterer Vorteil der im Wesentlichen senkrechten Gestaltung einer solchen Oberfläche besteht darin, dass sie beim Fahrer den Eindruck der Unzugänglichkeit des Hindernisraums erzeugt und auf diese Weise dessen Interpretation der Umgebungsszene fördert.

Alternativ ist eine gezielte Variation der Neigung bzw. eines Neigungsverlaufs der durch ein Begrenzungsobjekt dargestellten Bezugsfläche, insbesondere einer im Wesentlichen zum Freiraum weisenden Oberfläche, denkbar. Auf diese Weise können Eigenschaften von Hindernissen, beispielsweise die Nachgiebigkeit von Hindernissen oder eine von Hindernissen ausgehende Gefahr, an den Fahrer vermittelt werden. So kann beispielsweise vor einer Steinmauer eine senkrechte Bezugsfläche gebildet werden, während ein Gebüsch durch eine leicht ansteigende Rampe dargestellt wird. Gegebenenfalls setzt eine solche Darstellungsform eine hier nicht im Detail erläuterte Szeneninterpretation voraus.

Zum Zweck einer einfach interpretierbaren und klaren Abgrenzung zwischen Freiraum und Hindernisraum durch die Bezugsfläche werden die Grafikelemente vorzugsweise so ausgeführt und im Szenenbild angeordnet, dass das zumindest eine virtuelle Begrenzungsobjekt eine geringe räumliche Ausdehnung in zur Bezugsfläche orthogonaler Richtung besitzt. Eine solche Variante der Erfindung bedingt in der Regel auch eine geringe Verdeckung der Bestandteile des Hindernisraums durch die Grafikelemente im Szenenbild.

Um zu einer einfach interpretierbaren und klaren Abgrenzung beizutragen, wird zudem oder alternativ die Bezugsfläche des Begrenzungsobjekts bevorzugt räumlich im Wesentlichen an die Fahrebene angrenzend oberhalb der Fahrebene festgelegt und grafisch dargestellt. Unter der Fahrebene ist dabei diejenige, in der Regel im Wesentlichen ebene, Fläche zu verstehen, auf welcher das Kraftfahrzeug bewegt wird. In der Regel ist die Fahrebene durch die Straßenoberfläche definiert.

Das Angrenzen der Bezugsfläche an die Fahrebene, ist gemäß den meisten angedachten Ausführungsformen der Erfindung gleichbedeutend mit einem Aufliegen des zumindest einen Begrenzungsobjekts auf der Fahrebene. Insbesondere im Falle einer zweidimensionalen Darstellung eines Szenenbilds an den Fahrer, ist für eine einfache räumliche Interpretation der räumlichen Anordnung dargestellter virtueller Objekte die Bekanntheit eines vertikalen Bezugs sehr hilfreich. Sofern der Fahrer davon ausgehen kann, dass ein dargestelltes virtuelles Objekt auf einer bestimmten Ebene, hier der Fahrebene, aufliegt, kann eine ansonsten zur eindeutigen Festlegung der räumlichen Anordnung erforderliche Visualisierung anderer optischer Anhaltspunkte, wie etwa die Darstellung von Schatten, entfallen. Alternativ zum direkten Angrenzen der Bezugsfläche an die Fahrebene kann theoretisch ein beliebiger, dann aber beim Fahrer bevorzugt als bekannt vorauszusetzender, Abstand der Bezugsfläche von der Fahrebene gewählt werden.

Gemäß einer besonders bevorzugten Ausführungsform der vorliegenden Erfindung, wird die Bezugsfläche des zumindest einen Begrenzungsobjekts nur dann im Wesentlichen an die Fahrebene angrenzend oberhalb der Fahrebene festgelegt und grafisch dargestellt, wenn die Raumform des Begrenzungsobjekts, seine räumliche Anordnung in der Umgebungsszene, insbesondere seine horizontale Entfernung vom Beobachtungspunkt, sowie der Beobachtungspunkt und der Öffnungswinkel des Szenenbilds eine vollständige oder zumindest zur Erkennung der Bezugsfläche ausreichende Darstellung des Begrenzungsobjekts im Szenenbild zur Folge haben. Dies ist beispielsweise dann nicht gegeben, wenn sich ein Begrenzungsobjekt mit geringer Höhe in der Umgebungsszene zumindest teilweise so nah an dem Kraftfahrzeug befindet, dass zumindest eine Teil des Begrenzungsobjekts von einem erhöhten Beobachtungspunkt aus nicht im Szenenbild sichtbar ist. In einem solchen Fall wird die vertikale Position des Begrenzungsobjekts in der Umgebungsszene gemäß der genannten besonders bevorzugten Ausführungsform der vorliegenden Erfindung so verändert, dass das Begrenzungsobjekt vollständig oder zumindest in zur Erkennung der Bezugsfläche ausreichendem Maße sichtbar wird. Die vertikale Anordnung des Begrenzungsobjekts in der Umgebungsszene wird also abhängig von der horizontalen Entfernung desselben vom Beobachtungspunkt gewählt. Als Alternative oder Zusatz zu einer Veränderung der vertikalen Position des Begrenzungsobjekts in der Umgebungsszene ist auch eine Veränderung der Raumform des Begrenzungsobjekts, insbesondere seiner Höhe, und/oder eine Anpassung des Beobachtungspunkts und/oder Öffnungswinkels denkbar.

Die Kombination einer zu dem Freiraum weisenden im Wesentlichen senkrecht in der Umgebungsszene angeordneten Oberfläche des zumindest einen virtuellen Begrenzungsobjekts, einer geringen räumlichen Ausdehnung desselben in zur Bezugsfläche orthogonaler Richtung und eines Angrenzens der Bezugsfläche an die Fahrebene ergibt eine im Wesentlichen zaunförmige Gestalt des zumindest einen Begrenzungsobjekts. Eine solche Gestaltung ist besonders vorteilhaft, da die symbolische Bedeutung eines Zauns im Sinne einer Begrenzung in der Regel jedem Fahrer aus seiner Erfahrung bekannt und somit intuitiv verständlich ist. Zudem ist die Raumform eines zweidimensional oder dreidimensional grafisch dargestellten Zauns selbst bei sehr komplexem horizontalem Formverlauf für die meisten Fahrer sehr einfach interpretierbar.

Die Höhe eines dargestellten Zauns bzw. ein Höhenverlauf entlang des Zauns ist bei einer solchen Darstellung vorzugsweise im Wesentlichen konstant, kann alternativ aber, wie an früherer Stelle bereits allgemein erwähnt, variabel ausgeführt sein. Auch eine gezielte Variation der Neigung bzw. eines Neigungsverlaufs eines zaunförmigen Begrenzungsobjekts und somit eine bewusste Abweichung von der senkrechten Anordnung der Bezugsfläche in der Umgebungsszene kann, wie ebenfalls an früherer Stelle bereits allgemein erwähnt, einem klareren und/oder leichter interpretierbaren Informationsangebot an den Fahrer dienen und somit vorteilhaft sein.

Die Vorteile der oben genannten Metapher eines Zauns gelten in gleicher Weise für andere Metaphern wie etwa die eines Begrenzungsbands oder einer Mauer. Die Berechnung und grafische Darstellung solcher Begrenzungsobjekte ergibt sich für den Fachmann in analoger Art und Weise.

Zur Verstärkung einer solchen Metapher kann auf die Oberfläche eines grafisch dargestellten Begrenzungsobjekts eine grafische Textur aufgebracht werden. Auch eine solche Textur kann teiltransparent ausgeführt werden.

Alternativ oder zusätzlich wird gemäß einer bevorzugten Ausführungsform der vorliegenden Erfindung die Farbe und/oder Farbverteilung der das zumindest eine virtuelle Begrenzungsobjekt verkörpernden Grafikelemente abhängig vom Abstand des durch das jeweilige Grafikelement oder einen Teil desselben verkörperten Abschnitts des zumindest einen virtuellen Begrenzungsobjekts von einem Bezugspunkt, einer Bezugslinie oder einer Bezugsfläche des Kraftfahrzeugs gewählt. Bevorzugt werden dabei die typischen Signalfarben Rot, Gelb und Grün bzw. Mischtöne derselben eingesetzt.

Das zumindest eine virtuelle Begrenzungsobjekt, insbesondere dessen Oberfläche, kann aus Flächen und/oder Flächenabschnitten einheitlicher Farbgebung zusammengesetzt sein oder einen kontinuierlichen Farbverlauf aufweisen. Sofern das zumindest eine virtuelle Begrenzungsobjekt eine stückweise aus ebenen Flächenteilen zusammengesetzte Oberfläche besitzt, werden die Flächenteile bevorzugt jeweils in einer einheitlichen Farbe eingefärbt. Dies ermöglicht eine besonders einfache Bildberechnung und grafische Darstellung. Die Farbe eines Flächenteils kann als Mischfarbe aus den Farben angrenzender Flächenteile festgelegt werden. Beispielsweise kann ein zwischen einem sehr nahen roten Flächenteil und einem weiter entfernten gelben Flächenteil liegendes Flächenteil in der Mischfarbe orange eingefärbt werden. Nahezu ebenso einfach realisierbar ist eine Farbgebung eines Flächenteils durch die abschnittsweise Einfärbung in den Farben angrenzender Flächenteile. Beispielsweise kann ein zwischen einem sehr nahen roten Flächenteil und einem weiter entfernten gelben Flächenteil liegendes Flächenteil teilweise in rot und teilweise in gelb eingefärbt werden. Liegt das einzufärbende Flächenteil zwischen einem sehr nahen roten Flächenteil und einem sehr weit entfernten grünen Flächenteil kann zwischen einem roten und einem grünen Farbabschnitt ein gelber Farbabschnitt eingefügt werden. Als weitere Alternative ist ein kontinuierlicher Farbübergang zwischen den Farben angrenzender Flächenteile denkbar.

Die Raumform des zumindest einen virtuellen Begrenzungsobjekt, insbesondere die sich aus dieser Raumform ergebende Bezugsfläche kann prinzipiell beliebig im Raum festgelegt werden. Da das Kraftfahrzeug im Wesentlichen entlang der Fahrebene bewegt wird, ist insbesondere der räumliche Verlauf der Bezugsfläche entlang der Fahrebene entscheidend für eine effektive Abgrenzung zwischen Freiraum und Hindernisraum. Gemäß einer bereits genannten bevorzugten Ausführungsform der vorliegenden Erfindung erfolgt die Abgrenzung durch die zumindest eine Bezugsfläche horizontal im Wesentlichen durchgängig. Im Folgenden wird der Einfachheit halber von einer einzigen durchgängigen Bezugsfläche ausgegangen, welche durch ein zaunförmiges Begrenzungsobjekt grafisch wiedergegeben wird. Die Erfindung ist jedoch nicht auf diesen Spezialfall begrenzt.

Zur Festlegung des Verlaufs der abgrenzenden Bezugsfläche entlang der Fahrebene steht in der Regel nur eine begrenzte Anzahl von Abstandsmesspunkten zur Verfügung. Bevorzugt wird die zumindest eine Bezugsfläche des zumindest einen virtuellen Begrenzungsobjekts daher zumindest teilweise festgelegt als lineare, stückweise lineare oder nichtlineare Interpolation zwischen einer beschränkten Menge von Stützpunkten oder Stützlinien mit jeweils bekanntem Abstand von einem Bezugspunkt, einer Bezugslinie oder einer Bezugsfläche des Kraftfahrzeugs.

Ob Stützpunkte und/oder Stützlinien gewonnen werden, die Art der Gewinnung derselben und die Tatsache, ob sich die Stützpunkte und/oder Stützlinien wiederum jeweils auf einen Bezugspunkt des Kraftfahrzeugs, beispielsweise den Anbringungsort eines Sensors, eine Bezugslinie, beispielsweise die Fahrzeugkontur, oder eine Bezugsfläche, beispielsweise die tatsächliche Oberfläche des Kraftfahrzeugs, beziehen, ist abhängig vom zugrunde liegenden Abstandsmessverfahren und einer auf die Messung folgenden, ggf. modellbasierten, Auswertung der Messsignale. Die aus den Stützpunkten und/oder Stützlinien gewonnene Bezugsfläche kann, muss aber nicht notwendigerweise, die Stützpunkte und/oder Stützlinien selbst enthalten.

Denkbar ist der getrennte oder selektiv kombinierte Einsatz verschiedener bekannter Techniken und Vorrichtungen zur Umfelderkennung für Kraftfahrzeuge, z. B. über Radar, ultraschallbasiert, kamerabasiert und/oder lichtlaufzeitbasiert. Besonders wirtschaftlich ist dabei der Einsatz von ohnehin für andere Zwecke am Kraftfahrzeug vorgesehenen Mitteln. Bevorzugt wird dabei der getrennte oder kombinierte Einsatz der an vielen Fahrzeugen vorhandenen ultraschallbasierten Abstandssensoren und einer gemäß verschiedener Ausführungsformen der vorliegenden Erfindung für die Bilderfassung der Umgebungsszene benötigten Kamera, insbesondere Rückfahrkamera.

Jedes zur Abstandsmessung eingesetzte Abstandsmessverfahren wird bevorzugt so gestaltet oder angepasst, dass die jeweiligen Sensorcharakteristika Berücksichtigung finden. Diese Berücksichtigung kann sich entweder in der Gewinnung mehrerer Stützpunkte und/oder -linien aus einer einzigen Messung oder in der Art der Interpolation niederschlagen. Bei einer ultraschallbasierten Abstandsmessung kann ein erfasster Reflexionspunkt theoretisch an einer beliebigen Stelle auf einer typischerweise im Wesentlichen keulenförmigen Hyperfläche liegen. Dies kann beispielsweise durch eine Aufnahme mehrerer Punkte der Hyperfläche in das Interpolationsverfahren und/oder durch eine Interpolationskurve oder -fläche, deren Form zumindest abschnittsweise von der Form der Hyperfläche abhängt, berücksichtigt werden.

Eine kamerabasierte Abstandsmessung kann beispielsweise in an sich bekannter Weise mit Hilfe einer in das Kamerasystem integrierten Gitternetzbelichtung erfolgen.

Anstelle einer Interpolation oder als Vorbereitung derselben kann gemäß einer vorteilhaften Weiterbildung der Erfindung auf Basis der durchgeführten Umfelderkennung eine Hinderniskarte der Umgebungsszene erstellt werden. Zur Gewinnung einer solchen Hinderniskarte werden bevorzugt die Ergebnisse der Umfelderkennung zunächst in an sich bekannter Weise für eine, ggf. modellbasierte, Objekterkennung und -lokalisierung genutzt. Anschließend wird die gewonnene Hinderniskarte zur Definition des zumindest einen Begrenzungsobjekts bzw. der Bezugsfläche genutzt. Die Verfügbarkeit einer Hinderniskarte eröffnet hierbei verschiedene weitere Ausführungsformen eines erfindungsgemäßen Verfahrens, welche teilweise mit erheblichen Vereinfachungen und/oder einem Genauigkeitsgewinn verbunden sind. Beispielsweise können erkannte Hindernisse jeweils einzeln oder gruppiert durch zumindest ein virtuelles Begrenzungsobjekt grafisch abgegrenzt werden, welches sich direkt aus der Hinderniskarte gewinnen lässt. Gemäß einem Sonderfall der vorliegenden Erfindung kann ein geometrisches Modell eines erkannten Hindernisses direkt als Begrenzungsobjekt oder Teil eines Begrenzungsobjekts dienen.

Bevorzugt werden die durch ein erfindungsgemäßes Verfahren gewonnenen Abstandsmesswerte, Stützpunkte und/oder Stützlinien, Hinderniskarten und/oder Bezugsflächen für weitere Zwecke der Fahrerassistenz genutzt. Hierzu können die gewonnenen Größen entweder von den Vorrichtungen, welche das erfindungsgemäße Verfahren durchführen, an andere Vorrichtungen des Kraftfahrzeugs oder außerhalb des Kraftfahrzeugs übermittelt werden oder die gewonnenen Größen werden an Verarbeitungsprozesse weitergegeben, an welchen dieselben Vorrichtungen des Kraftfahrzeugs beteiligt sind, welche auch das erfindungsgemäße Verfahren durchführen. Bei einer solchen Mehrfachnutzung von Daten ist sowohl die Verwendung von Rohdaten als auch von End- oder Zwischenergebnissen eines erfindungsgemäßen Verfahrens denkbar. Die Verwendung kann wiederum als Rohdatenmaterial und/oder auf beliebiger höherer Verarbeitungsstufe erfolgen. Durch eine solche Mehrfachnutzung kann der technische Gesamtaufwand reduziert werden und/oder ein zweites Fahrerassistenzsystem kann hinsichtlich Genauigkeit und/oder Effizienz verbessert werden.

Insbesondere können Daten, welche im Rahmen eines erfindungsgemäßen Verfahrens berechnet werden, neben der erfindungsgemäßen grafischen Darstellung für den Fahrer auch als Grundlage für einen automatischen Rangier- und Einparkassistenten verwendet bzw. mitverwendet werden. Auf Basis einer solchen Mehrfachnutzung oder unabhängig hiervon sieht eine bevorzugte Weiterbildung der Erfindung ein Verfahren und/oder eine Vorrichtung vor, welche den Fahrer in die Lage versetzen, anhand einer erfindungsgemäßen grafischen Darstellung zu beobachten, wie sein Kraftfahrzeug automatisch unter Führung des Rangier- und Einparkassistenten manövriert wird. Bevorzugt wird dem Fahrer dabei zudem die Möglichkeit zum Eingriff in das Manöver des Rangier- und Einparkassistenten gegeben.

Um ungewollte Kollisionen auszuschließen bzw. möglichst unwahrscheinlich zu machen, werden bevorzugt sowohl Stützlinien oder Stützpunkte als auch die Bezugsfläche bzw. Abschnitte derselben in Berechnung und Darstellung im Zweifelsfall in Richtung des Freiraums verschoben. Für den Fahrer, der es in der Regel nicht wagen wird, in den angezeigten Hindernisraum einzudringen, stellt dies eine gewisse Restriktion dar. Je geringer die Unsicherheit der Messung und/oder Berechnung und/oder Anzeige ist, umso geringer kann diese Restriktion gehalten werden.

Ein in den bisherigen Ausführungen noch nicht explizit genannter weiterer Vorteil eines erfindungsgemäßen Verfahrens besteht darin, dass bei schlechten Sichtverhältnissen oder Dunkelheit die Augmentierung des Szenenbilds durch Grafikelemente dessen Nutzbarkeit erheblich verbessert oder dieses erst nutzbar macht.

Dies gilt zum einen, da das zumindest eine virtuelle Begrenzungsobjekt anders als die realen Bestandteile der Umgebungsszene auch bei schlechten Sichtverhältnissen oder Dunkelheit erkennbar bleibt. Dies gilt jedoch in verstärktem Maße, da bei schlechter oder nicht gegebener Erkennbarkeit der realen Bestandteile der Umgebungsszene erst die erfindungsgemäße dreidimensionale Raumform des zumindest einen Begrenzungsobjekts eine räumliche Interpretation des augmentierten Szenenbilds erlaubt. Die aus dem Stand der Technik bekannte bloße Hinzunahme von Hilfslinien erlaubt hingegen bei schlechten Sichtverhältnissen oder Dunkelheit für die meisten Fahrer keinerlei Zuordnung zwischen dem dargestellten Bild und den räumlichen Verhältnissen der Umgebungsszene.

Die oben angestellten Überlegungen bezüglich schlechter Sichtverhältnisse oder Dunkelheit gelten in gleichem Maße bei einem Ausfall der Erfassung oder Darstellung des realen Szenenbilds. Die erfindungsgemäße Darstellung des zumindest einen Begrenzungsobjekts ist auch eigenständig, d. h. ohne unterlagertes Realbild der Umgebungsszene, für den Fahrer interpretierbar. Dasselbe gilt bei einer zeitlich verzögerten Darstellung des Realbilds. Der Fahrer kann sich dann anhand des zeitlich vorauseilenden zumindest einen Begrenzungsobjekts orientieren.

Verschiedenen Ausführungsformen eines erfindungsgemäßen Verfahrens liegt eine, in der Regel dreidimensionale, geometrische Modellierung von in einer Hinderniskarte enthaltenen Hindernissen und/oder des zumindest einen Begrenzungsobjekts zugrunde. Hieraus kann sich ein weiterer Vorteil der Erfindung ergeben. Bei bekannter Fahrzeugbewegung von einer alten zu einer neuen Fahrzeugposition lassen sich aus einem solchen geometrischen Modell neue für die neue Fahrzeugposition gültige Grafikelemente errechnen. Bei Verwendung einer Hinderniskarte wird hierzu unter Umständen ein komplett neues für die neue Fahrzeugposition gültiges Begrenzungsobjekt errechnet und visualisiert. Bei anderen Methoden zur Berechnung des zumindest einen Begrenzungsobjekts wird lediglich eine neue Abbildung eines auch nach der Fahrzeugbewegung unveränderten Begrenzungsobjekts im Szenenbild errechnet. Die Fahrzeugbewegung ist dabei durch eine Veränderung der Beobachtungsposition und/oder eine Veränderung von eventuell in die Berechnung eingehenden Bezugsgrößen zu berücksichtigen. Auf Basis des geometrischen Modells lassen sich also alleine aus der Fahrzeugbewegung neue Grafikelemente prädizieren.

Diese Möglichkeit kann auf vielfältige Weise ausgenutzt werden. Zum einen kann ein Plausibilitäts-Check durchgeführt werden zwischen einer durch eine solche Prädiktion errechneten Darstellung und einer auf der Basis neuer Abstandsmessungen errechneten Darstellung. Zum anderen ist es möglich, dass - etwa bei einer geringen Messrate der Umfelderkennung - die prädizierte Darstellung schneller zur Verfügung steht als eine auf der Basis neuer Abstandsmessungen errechnete Darstellung. Auf diese Weise könnte eine flüssigere und für den Fahrer leichter interpretierbare Augmentierung des Szenenbilds vorgenommen werden. Die Berechnung und Darstellung der Grafikelemente könnte dann beispielsweise nur in regelmäßigen oder unregelmäßigen Abständen auf der Basis neuer Abstandsmessungen erfolgen und zwischenzeitlich auf der Basis modellbasierter Prädiktion.

Für die vollständige oder teilweise Ausführung der Berechnungen, welche zur Anwendung eines erfindungsgemäßen Verfahrens erforderlich sind, kann prinzipiell zumindest eine dedizierte Recheneinheit im Kraftfahrzeug vorgesehen werden. Alternativ oder zusätzlich können die Berechnungen vorteilhafterweise teilweise oder vollständig durch eine oder mehrere bereits für andere Zwecke im Kraftfahrzeug vorgesehene Recheneinheiten ausgeführt werden. Ebenso kann die Abstandsmessung und/oder Bilderfassung und/oder Bildausgabe, welche zur Anwendung eines erfindungsgemäßen Verfahrens erforderlich ist, durch dedizierte Vorrichtungen und/oder durch bereits für andere Zwecke im Kraftfahrzeug vorgesehene und hierzu geeignete Mittel erfolgen.

Gemäß bevorzugter Ausführungsformen der vorliegenden Erfindung wird dem Fahrer die Möglichkeit gegeben, ein erfindungsgemäßes Verfahren durch Bedieneingaben zu beeinflussen. Die hierzu vorzusehenden Bedienelemente können in Form von in Hardware ausgeführten Bedienelementen und/oder in Form von Grafikelementen im augmentierten Szenenbild ausgeführt werden. Für die letztgenannte Ausführungsform müssen die bei einem erfindungsgemäßen Verfahren verwendeten Bilddarstellungsmittel für entsprechende Eingaben geeignet sein, z. B. als Touch-Screen ausgeführt sein.

Anhand der beigefügten Zeichnungen wird die Erfindung weiter erläutert. Dabei zeigen schematisch
- Fig. 1: ein erstes Beispiel für eine Überlagerung eines zweidimensionalen Szenenbilds einer dreidimensionalen Umgebungsszene mit Grafikelementen gemäß einer ersten bevorzugten Ausführungsform der vorliegenden Erfindung,
- Fig. 2: ein zweites Beispiel für eine Überlagerung eines zweidimensionalen Szenenbilds einer dreidimensionalen Umgebungsszene mit Grafikelementen gemäß einer ersten bevorzugten Ausführungsform der vorliegenden Erfindung,
- Fig. 3: ein drittes Beispiel für eine Überlagerung eines zweidimensionalen Szenenbilds einer dreidimensionalen Umgebungsszene mit Grafikelementen gemäß einer ersten bevorzugten Ausführungsform der vorliegenden Erfindung und
- Fig. 4: ein Beispiel für eine Überlagerung eines zweidimensionalen Szenenbilds einer dreidimensionalen Umgebungsszene mit Grafikelementen gemäß einer zweiten bevorzugten Ausführungsform der vorliegenden Erfindung.

Gemäß einer ersten bevorzugten Ausführungsform der vorliegenden Erfindung wird in einem Kraftfahrzeug zur Unterstützung des Fahrers insbesondere bei Rückwärtsfahrten und Parkvorgängen ein zweidimensionales Szenenbild der dreidimensionalen Umgebungsszene des Rückraums des Kraftfahrzeugs durch eine Rückfahrkamera erfasst. Das erfasste Szenenbild wird durch eine Recheneinheit aufbereitet und durch einen im Fahrzeug angeordneten Monitor in aufbereiteter Form an den Fahrer ausgegeben.

Die Aufbereitung des Szenenbilds besteht darin, dass dem erfassten Kamerabild Grafikelemente überlagert werden, welche gemeinsam ein einziges oder mehrere virtuelle Begrenzungsobjekte verkörpern, welche in der Umgebungsszene angeordnet sind. Die Begrenzungsobjekte grenzen den im Bildvordergrund befindlichen kollisionsfrei durch das Kraftfahrzeug erreichbaren Freiraum von dem im Bildhintergrund befindlichen nicht kollisionsfrei erreichbaren Hindernisraum ab.

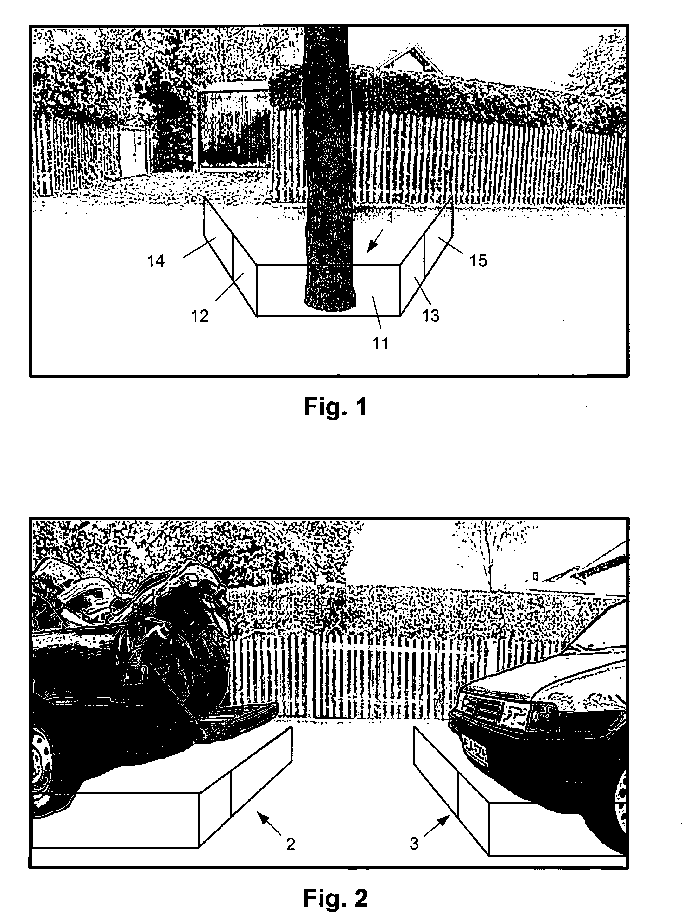

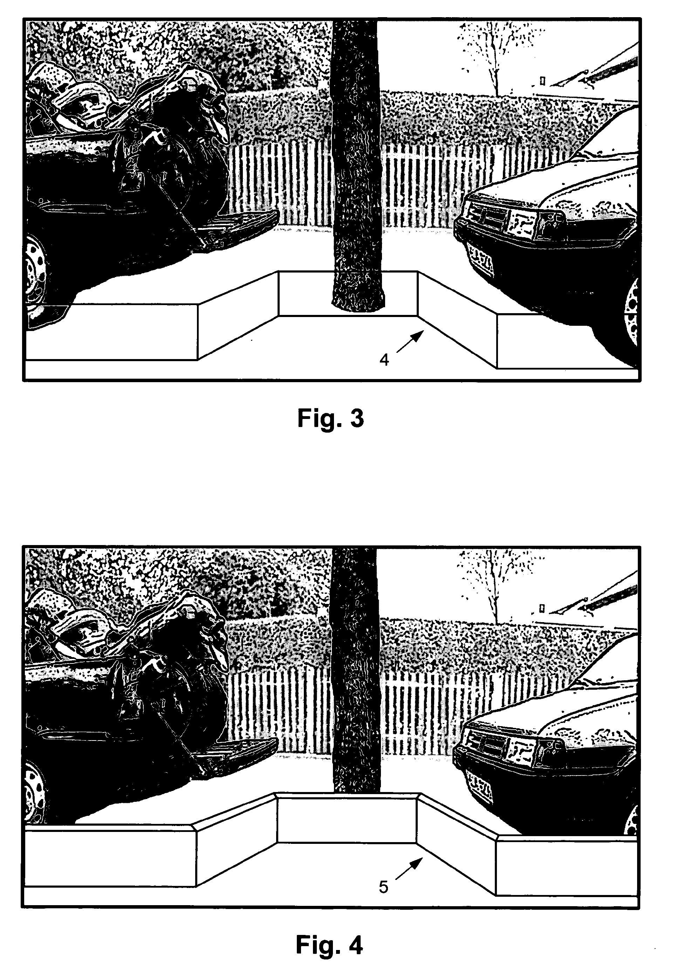

Fig. 1, Fig. 2 und Fig. 3 zeigen Momentaufnahmen des an den Fahrer ausgegebenen aufbereiteten Szenenbilds. In Fig. 1 befindet sich ein Baumstamm als Hindernis in dem im Bildhintergrund befindlichen Hindernisraum. In Fig. 2 befinden sich im Hindernisraum zwei geparkte Fahrzeuge. In Fig. 3 befinden sich im Hindernisraum zwei geparkte Fahrzeuge und eine Baumstamm. Das in Fig. 1 dargestellte virtuelle Begrenzungsobjekt 1, die in Fig. 2 dargestellten virtuellen Begrenzungsobjekte 2 und 3 und das in Fig. 3 dargestellte virtuelle Begrenzungsobjekt 4 besitzen jeweils eine im Wesentlichen zaunförmige Gestalt und eine konstante Höhe (hier 25 cm) in der dreidimensionalen Umgebungsszene.

Im Folgenden wird der Einfachheit halber im Singular von einem einzigen Begrenzungsobjekt gesprochen. Diese Ausdrucksform soll jedoch stets verstanden werden als den Fall mehrerer Begrenzungsobjekte und/oder eines mehrteiligen Begrenzungsobjekts enthaltend. Die rechnerische und grafische Behandlung mehrerer Begrenzungsobjekte ergibt sich für den Fachmann in analoger Weise.

Ein wesentlicher Bestandteil der durch die dargestellten Szenenbilder an den Fahrer vermittelten Information ist der räumliche Verlauf, insbesondere der horizontale Verlauf, der im Folgenden als Bezugsfläche bezeichneten Fläche, welche durch das zumindest eine Begrenzungsobjekt grafisch dargestellt wird und den Freiraum für den Fahrer erkennbar von dem Hindernisraum separiert. Im vorliegenden Beispiel erfolgt die grafische Darstellung der Bezugsfläche als Oberfläche des Begrenzungsobjekts.

Die Abgrenzung des Freiraums vom Hindernisraum erfolgt im vorliegenden Beispiel abschnittsweise durchgängig. Prinzipiell sieht die den Zeichnungen Fig. 1, Fig. 2 und Fig. 3 zugrundeliegende Darstellungsform eine vollständig horizontal durchgängige, d. h. sich über die gesamte Breite des Szenenbilds erstreckende, Abgrenzung vor. Allerdings wird in bestimmten Abschnitten der Umgebungsszene und in entsprechenden Abschnitten des Szenenbilds, in welchen eine Bezugsfläche einen bestimmten Abstand, im vorliegenden Beispiel 3 m, zum Fahrzeug überschreiten würde, keine Bezugsfläche berechnet und dargestellt. Daraus ergibt sich, dass nur in Fig. 3 eine vollständig horizontal durchgängige Abgrenzung dargestellt ist, während sich die Darstellung der Begrenzungsobjekte in Fig. 1 und Fig. 2 nicht über die gesamte Breite des Szenenbilds erstreckt.

Bevor weiter auf die Darstellungsform der Bezugsfläche eingegangen wird, soll im Folgenden kurz ihre rechnerische Bestimmung erklärt werden. Die Bestimmung der Bezugsfläche erfolgt auf der Basis von durch Umfelderkennung des Kraftfahrzeugs gewonnenen Daten. Im vorliegenden Beispiel sind dies Daten von in das Fahrzeugheck integrierten Ultraschallsensoren.

Dabei wird in an sich bekannter Weise der Abstand einer Vielzahl von Raumpunkten in der Umgebungsszene von jeweils einem Bezugspunkt am Kraftfahrzeug, im vorliegenden Beispiel jeweils dem Anbringungsort des jeweiligen Ultraschallsensors, bestimmt. Diese Raumpunkte lägen bei sehr hoher horizontaler Messauflösung auf der Oberfläche von Hindernissen. Bei weniger hoher Messauflösung ist die jeweilige Sensorcharakteristik im Sinne einer worst-case-Betrachtung zu berücksichtigen. Ein durch eine Ultraschall-Einzelmessung erfasster Reflexionspunkt kann theoretisch an einer beliebigen Stelle auf einer typischerweise im Wesentlichen keulenförmigen Hyperfläche liegen. Als Raumpunkte werden dann bei jeder Messung zumindest zwei gegenüberliegende fahrzeugnahe Punkte auf dieser Hyperfläche festgelegt. Die so festgelegten Raumpunkte liegen in der Regel im Freiraum vor einem Hindernis, gegebenenfalls leicht seitlich vor diesem.

Für jeden der festgelegten Raumpunkte wird anschließend eine senkrecht in der Umgebungsszene stehende Stützlinie durch den jeweiligen Raumpunkt bestimmt.

Dem in Fig. 1 dargestellten Begrenzungsobjekt 1 liegt beispielsweise eine Ultraschallmessung zugrunde, bei welcher durch zumindest einen Ultraschallsensor der in Fig. 1 sichtbare Baum detektiert wurde. Entsprechend der horizontal keulenförmigen Charakteristik der verwendeten Sensoren wurden auf Basis dieser Messung zwei Raumpunkte am jeweils linken und rechten Keulenrand festgelegt. Die beiden dadurch definierten Stützlinien entsprechen in Fig. 1 der Trennlinie zwischen der Fläche 11 und dem Flächenteil 12 bzw. der Trennlinie zwischen der Fläche 11 und dem Flächenteil 13. Beide Trennlinien stehen sowohl im Szenenbild Fig. 1 als auch in der Umgebungsszene senkrecht.

Da der Abstand der festgelegten Raumpunkte vom jeweiligen Sensor-Anbringungsort aus der Ultraschall-Abstandsmessung bekannt ist, ist der Abstand der wie beschrieben senkrecht in der Umgebungsszene festgelegten Stützlinien von diesem Anbringungsort ebenfalls bekannt. Die Stützlinien stellen im vorliegenden Fall lediglich die Erweiterung der Raumpunkte auf die vertikale Dimension der Umgebungsszene dar. Unter Berücksichtigung der aus einem geometrischen Fahrzeugmodell bekannten Anbringungsorte der Ultraschallsensoren am Kraftfahrzeug wird modellbasiert der Abstand der Stützlinien von der Fahrzeugkontur errechnet.

Die Bezugsfläche wird im einfachsten Fall als stückweise lineare Interpolation zwischen den gewonnenen Stützlinien festgelegt. Die Interpolation bezieht sich dabei insbesondere auf den horizontalen Verlauf der Bezugsfläche in der Umgebungsszene. Der vertikale Verlauf der Bezugsfläche ist im vorliegenden Beispiel durch die Gestalt eines senkrecht stehenden Zauns konstanter Höhe hinreichend definiert.

Zweckmäßigerweise wird die Höhe der zuvor definierten Stützlinien gleich der Höhe des Zauns (hier 25 cm) festgelegt. Ebenso zweckmäßigerweise wird das untere Ende der Stützlinien als Punkt in der Fahrebene gewählt. Die Stützlinien und die Bezugsfläche sind in der Umgebungsszene somit angrenzend an die Fahrebene oberhalb von dieser angeordnet.

Wie bereits erwähnt, wird in Abschnitten der Umgebungsszene und in entsprechenden Abschnitten des Szenenbilds, in welchen die Bezugsfläche einen bestimmten Abstand, im vorliegenden Beispiel 3 m, zum Fahrzeug überschreiten würde, keine Bezugsfläche berechnet und dargestellt. Daraus kann sich ergeben, dass die berechnete Bezugsfläche mehrere Teile besitzt oder, bei anderer Betrachtungsweise, mehrere Bezugsflächen entstehen. Im Folgenden wird der Einfachheit halber weiter von einer einzigen Bezugsfläche gesprochen. Die rechnerische und grafische Behandlung mehrerer Teile einer Bezugsfläche und/oder mehrerer Bezugsflächen ergibt sich in analoger Weise.

Die Auswertung der Ultraschallmessungen und die oben beschriebene Bestimmung der Bezugsfläche werden von einer im Fahrzeug angeordneten Recheneinheit durchgeführt. Diese Recheneinheit ist ferner zum grafischen Rendern dreidimensionaler Objekte sowie zur Aufnahme von Bilddaten einer Kamera und zur Ausgabe von Bilddaten an einen Monitor geeignet.

Auf Basis der wie beschrieben bestimmten Bezugsfläche wird in der Recheneinheit ein dreidimensionales Begrenzungsobjekt erzeugt, welches eine senkrecht in der Umgebungsszene stehende und zum Freiraum weisende Oberfläche besitzt, welche die Form der Bezugsfläche hat. Wie bereits zuvor erwähnt, wird hierzu im vorliegenden Beispiel ein zaunförmiges Begrenzungsobjekt erzeugt. Zudem wird eine perspektivische zweidimensionale grafische Darstellung des Begrenzungsobjekts erzeugt, deren Parameter, insbesondere Beobachtungsposition und Öffnungswinkel, denjenigen der Rückfahrkamera entsprechen.

An dieselbe Recheneinheit wird ein durch die Rückfahrkamera erfasstes Realbild der Umgebungsszene übertragen. Die grafische Darstellung des Begrenzungsobjekts wird durch die Recheneinheit dem durch die Rückfahrkamera erfassten Realbild überlagert und durch den Monitor zur Anzeige gebracht.

Um die im Szenenbild hinter den Begrenzungsobjekten gelegenen Bestandteile des Hindernisraums nicht komplett zu verdecken, werden die Begrenzungsobjekte gemäß der in den Zeichnungen Fig. 1, Fig. 2 und Fig. 3 beispielhaft dargestellten ersten bevorzugten Ausführungsform der vorliegenden Erfindung teiltransparent ausgeführt.

Durch ihre perspektivische und räumlich stimmige Darstellung werden die Begrenzungsobjekte vom Fahrer als Bestandteile der Umgebungsszene interpretiert. In Folge ihrer zaunförmigen Gestalt sind die Begrenzungsobjekte vom Fahrer intuitiv als Begrenzungen zu erkennen. Aufgrund der geringen Dicke des Zauns, ist seine zum Freiraum weisende Oberfläche im Wesentlichen räumlich identisch mit seiner zum Hindernisraum weisenden Oberfläche. Diese Fläche ist für den Fahrer intuitiv als Bezugsfläche der Abgrenzung zwischen Freiraum und Hindernisraum erkennbar.

Die aus dem oben beschriebenen Verfahren resultierende perspektivisch verzerrte und skalierte Darstellung des Zauns unterstützt den Fahrer bei der räumlichen Interpretation der Umgebungsszene. Ferner wird der Fahrer durch eine im Folgenden beschriebene symbolische Farbgebung des Zauns bei der räumlichen Interpretation der Umgebungsszene unterstützt. Den Flächen der dargestellten Begrenzungsobjekte werden zu diesem Zweck im grafischen Rendering anteilig oder vollständig bestimmte Farben zugewiesen. Die Zuweisung der Farben erfolgt in Abhängigkeit vom Abstand der benachbarten Stützlinien vom Kraftfahrzeug.

Im vorliegenden Beispiel werden Flächen, deren benachbarte Stützlinien weniger als 1 m vom Kraftfahrzeug entfernt sind, rot dargestellt. Die Farbe gelb entspricht einem Abstand zwischen 1 m und 2 m, die Farbe grün einem Abstand zwischen 2 m und 3 m. Bei einem Abstand von mehr als 3 m erfolgt, wie bereits erwähnt, keine Darstellung.

Liegen die beiden benachbarten Stützlinien einer Fläche eines Begrenzungsobjekts in unterschiedlichen Farbzonen, so wird die Fläche in Flächenteile unterschiedlicher Farbgebung unterteilt. Die Flächenteile werden dabei genau so festgelegt, dass der Farbwechsel am Übergang der Farbzonen stattfindet.

In Fig. 1 sind beispielsweise die Fläche 11 und die beiden Flächenteile 12 und 13 gelb eingefärbt. Die Flächenteile 14 und 15 sind zur Kennzeichnung einer weiteren Entfernung vom Fahrzeug, hier mehr als 2 m, grün eingefärbt.

Würde sich das Kraftfahrzeug dem Baum in Fig. 1 geradlinig ca. 1 m nähern (hier nicht bildlich dargestellt) würde das Begrenzungsobjekt, unter der Voraussetzung einer unveränderten Anordnung der Hindernisse, weiterhin in unveränderter räumlicher Gestalt, Lage und Position in der Umgebungsszene dargestellt. Seine Gestalt, Lage und Position im Szenenbild würde sich dabei jedoch verändern, beispielsweise würde das Begrenzungsobjekt durch die Annäherung perspektivisch vergrößert. Zudem würde die Fläche 11 und die beiden Flächenteile 12 und 13 rot eingefärbt, die Flächenteile 14 und 15 gelb.

Wie bereits an früherer Stelle erwähnt, werden die Flächen und Flächenteile nicht als undurchsichtige Flächen der jeweiligen Farbe dargestellt, sondern teiltransparent.

Fig. 4 zeigt ein Beispiel für eine Überlagerung eines zweidimensionalen Szenenbilds einer dreidimensionalen Umgebungsszene mit Grafikelementen gemäß einer zweiten bevorzugten Ausführungsform der vorliegenden Erfindung.

Fig. 4 bezieht sich auf dieselbe Umgebungsszene wie Fig. 3. Die Darstellung gemäß der zweiten bevorzugten Ausführungsform gemäß Fig. 3 unterscheidet sich von der ersten bevorzugten Ausführungsform gemäß Fig. 4 vor allem darin, dass das Begrenzungsobjekt 5, anders als das Begrenzungsobjekt 4, nicht transparent dargestellt ist und eine größere räumliche Ausdehnung in zur Bezugsfläche orthogonaler Richtung besitzt.

Auch bei der Darstellung gemäß Fig. 4 ist die senkrecht in der Umgebungsszene stehende und zum Freiraum weisende Oberfläche des Begrenzungsobjekts 5 für den Fahrer intuitiv als Bezugsfläche der Abgrenzung zwischen Freiraum und Hindernisraum erkennbar.

## Patentansprüche

1. Verfahren zur grafischen Darstellung der Umgebung eines Kraftfahrzeugs, bei welchem einem Szenenbild, welches eine dreidimensionale Umgebungsszene der Umgebung des Kraftfahrzeugs darstellt und welches zweidimensional oder dreidimensional an den Fahrer des Kraftfahrzeugs ausgegeben wird, Grafikelemente überlagert werden, welche zur Unterstützung des Fahrers hinsichtlich der Interpretation der im Szenenbild enthaltenen räumlichen Information dienen,
**dadurch gekennzeichnet,**
**dass** die Grafikelemente zumindest teilweise so ausgeführt und im Szenenbild angeordnet werden, dass sie in der Umgebungsszene zumindest ein virtuelles Begrenzungsobjekt mit dreidimensionaler Raumform verkörpern, welches zumindest eine Bezugsfläche aufweist, die einen kollisionsfrei durch das Kraftfahrzeug erreichbaren Freiraum von einem nicht kollisionsfrei erreichbaren Hindernisraum abgrenzt.

2. Verfahren nach Anspruch 1, **dadurch gekennzeichnet,**
**dass** die Grafikelemente so ausgeführt und im Szenenbild angeordnet werden, dass die Abgrenzung durch die zumindest eine Bezugsfläche horizontal im Wesentlichen durchgängig ist.

3. Verfahren nach einem der Ansprüche 1 oder 2, **dadurch gekennzeichnet,**
**dass** die das zumindest eine virtuelle Begrenzungsobjekt verkörpernden Grafikelemente zumindest teilweise zumindest teiltransparent ausgeführt werden.

4. Verfahren nach einem der Ansprüche 1 bis 3, **dadurch gekennzeichnet,**
**dass** das zumindest eine virtuelle Begrenzungsobjekt proportional oder überproportional perspektivisch skaliert und/oder verzerrt dargestellt wird.

5. Verfahren nach einem der Ansprüche 1 bis 4, **dadurch gekennzeichnet,**
**dass** die Grafikelemente so ausgeführt und im Szenenbild angeordnet werden, dass das zumindest eine virtuelle Begrenzungsobjekt eine zu dem Freiraum weisende im Wesentlichen senkrecht in der Umgebungsszene angeordnete Oberfläche aufweist
und/oder
**dass** die Grafikelemente so ausgeführt und im Szenenbild angeordnet werden, dass das zumindest eine virtuelle Begrenzungsobjekt eine geringe räumliche Ausdehnung in zur Bezugsfläche orthogonaler Richtung besitzt.

6. Verfahren nach einem der Ansprüche 1 bis 5, **dadurch gekennzeichnet,**
**dass** die Bezugsfläche des zumindest einen Begrenzungsobjekts im Wesentlichen an die Fahrebene angrenzend oberhalb der Fahrebene gewählt wird.

7. Verfahren nach einem der Ansprüche 1 bis 6, **dadurch gekennzeichnet,**
**dass** die Farbe und/oder Farbverteilung der das zumindest eine virtuelle Begrenzungsobjekt verkörpernden Grafikelemente abhängig vom Abstand des durch das jeweilige Grafikelement oder einen Teil desselben verkörperten Abschnitts des zumindest einen virtuellen Begrenzungsobjekts von einem Bezugspunkt, einer Bezugslinie oder einer Bezugsfläche des Kraftfahrzeugs gewählt wird.

8. Verfahren nach einem der Ansprüche 1 bis 7, **dadurch gekennzeichnet,**
**dass** die zumindest eine Bezugsfläche des zumindest einen virtuellen Begrenzungsobjekts zumindest teilweise festgelegt wird als lineare, stückweise lineare oder nichtlineare Interpolation zwischen einer beschränkten Menge von Stützpunkten oder Stützlinien mit jeweils bekanntem Abstand von einem Bezugspunkt, einer Bezugslinie oder einer Bezugsfläche des Kraftfahrzeugs.

9. Verfahren nach Anspruch 8, **dadurch gekennzeichnet,**
**dass** die Stützlinien im Wesentlichen senkrecht in der Umgebungsszene stehen
und/oder
**dass** der Interpolation die Charakteristik einer zur Abstandsbestimmung verwendeten Sensorik zugrundegelegt wird.

10. Verfahren nach einem der Ansprüche 1 bis 9, **dadurch gekennzeichnet,**
**dass** die Höhe oder ein Höhenprofil des zumindest einen virtuellen Begrenzungsobjekts und/oder die Neigung oder der Neigungsverlauf der zumindest einen Bezugsfläche des zumindest einen Begrenzungsobjekts abhängig von Eigenschaften von Hindernissen festgelegt wird.

11. Verfahren nach einem der Ansprüche 1 bis 10, **dadurch gekennzeichnet,**
**dass** die Berechnung der zumindest einen Bezugsfläche des zumindest einen Begrenzungsobjekts auf Basis einer Hinderniskarte und/oder eines geometrischen Modells erkannter Hindernisse erfolgt.
